(19) Europäisches Patentamt
European Patent Office
Office européen des brevets

(11) **EP 3 425 528 A1**

(12) **EUROPEAN PATENT APPLICATION**
published in accordance with Art. 153(4) EPC

(43) Date of publication:
**09.01.2019 Bulletin 2019/02**

(51) Int Cl.:
***G06F 17/30*** (2006.01)

(21) Application number: **17759178.1**

(22) Date of filing: **24.02.2017**

(86) International application number:
**PCT/CN2017/074674**

(87) International publication number:
**WO 2017/148327 (08.09.2017 Gazette 2017/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **03.03.2016 CN 201610120612**

(71) Applicant: **Tencent Technology (Shenzhen)
Company Limited
Shenzhen, Guangdong 518057 (CN)**

(72) Inventor: **ZENG, Wei
Shenzhen
Guangdong 518057 (CN)**

(74) Representative: **Eisenführ Speiser
Patentanwälte Rechtsanwälte PartGmbB
Postfach 31 02 60
80102 München (DE)**

(54) **SERVICE PARAMETER SELECTION METHOD AND RELATED DEVICE**

(57) A service parameter selection method and a related device introduced in the embodiments of the present application. The method comprising: firstly configuring a first candidate sample set, wherein the first candidate sample set comprises a plurality of candidate samples; acquiring an IV value of each of the candidate samples in the first candidate sample set; determining a candidate sample, in the first candidate sample set, with the IV value greater than a pre-set threshold value as a first primary selection sample, and storing the first primary selection sample in a second set of samples to be selected; using stepwise discriminate analysis and/or cluster analysis to process the second set of samples to be selected so as to obtain a target sample having a significant standard, wherein the target sample is used for determining the service parameter; using the IV value to remove an insignificant variable to obtain the second set of samples to be selected; and performing stepwise discriminate analysis and cluster analysis on the second set of samples to be selected so as to obtain a target sample having a significant standard. By means of the method, the diversity of variables is guaranteed, an existing variable selection process is optimized, and the problem of losing variable information during a dimension reduction process is reduced.

Configure a first candidate sample set including multiple candidate samples — S201

Acquire an IV of each of the candidate samples in the first candidate sample set — S202

Determine a candidate sample of which the IV exceeds a preset threshold in the first candidate sample set as a first preliminary selection sample, and store the first preliminary selection sample in a second to-be-selected sample set — S203

Process the second to-be-selected sample set by using stepwise discriminant analysis, cluster analysis, or a combination of the stepwise discriminant analysis and the cluster analysis to acquire a target sample meeting a significance criterion. The target sample is used to determine the service parameter — S204

Perform a duplication eliminating operation on the third to-be-processed sample set and the fourth to-be-processed sample set — S205

**Figure 2**

## Description

The present application claims the priority to Chinese Patent Application No. 201610120612.3, titled "SERVICE PARAMETER SELECTION METHOD AND RELATED DEVICE", filed on March 3, 2016 with the Chinese State Intellectual Property Office, which is incorporated herein by reference in its entirety.

## FIELD

The present disclosure relates to the field of data processing, and in particular to a method for selecting a service parameter and a related device.

## BACKGROUND

In the modeling performed with data on the internet, service parameters that are useful for the modeling are required to be selected from massive data. In the variable selection process, a large amount of data is generated. In a case that the data is directly used to conduct services, the calculation is time-consuming. In addition, loss of statistically valuable service parameters may be caused due to an inappropriate service parameter selection method.

## SUMMARY

In view of this, a method for selecting a service parameter and a related device are provided according to the embodiments of present disclosure.

In a first aspect, a method for selecting a service parameter is provided according an embodiment of the present disclosure. The method includes: configuring a first candidate sample set including multiple candidate samples; acquiring an information value (IV) of each of the candidate samples in the first candidate sample set, where the IV is a ratio of a variable to a binary dependent variable; determining a candidate sample of which the IV exceeds a preset threshold in the first candidate sample set as a first preliminary selection sample, and storing the first preliminary selection sample in a second to-be-selected sample set; and processing the second to-be-selected sample set by using stepwise discriminant analysis or cluster analysis to acquire a target sample meeting a significance criterion. The target sample is used to determine the service parameter.

In a possible implementation, in the target sample meeting the significance criterion, correlations between variables with a same type and correlations between variables with different types meet the significance criterion.

In a possible implementation, the acquiring an IV of each of the candidate samples in the first candidate sample set includes: splitting the candidate sample based on the number of pre-configured binary files; and acquiring the IV of the candidate sample based on correspondence between the binary files and the IV

In a possible implementation, the processing the second to-be-selected sample set by using stepwise discriminant analysis or cluster analysis to acquire a target sample meeting a significance criterion includes: processing the second to-be-selected sample set by using a combination of the stepwise discriminant analysis and the cluster analysis to acquire the target sample meeting the significance criterion.

In a possible implementation, the processing the second to-be-selected sample set by using stepwise discriminant analysis or cluster analysis to acquire a target sample meeting a significance criterion includes: performing the stepwise discriminant analysis on the second to-be-selected sample set to acquire a third to-be-processed sample set or performing the cluster analysis on the second to-be-selected sample set to acquire a fourth to-be-processed sample set; and determining the third to-be-processed sample set or the fourth to-be-processed sample set as the target sample.

In a possible implementation, the processing the second to-be-selected sample set by using stepwise discriminant analysis or cluster analysis to acquire a target sample meeting a significance criterion includes: performing the stepwise discriminant analysis on the second to-be-selected sample set to acquire a third to-be-processed sample set and performing the cluster analysis on the second to-be-selected sample set to acquire a fourth to-be-processed sample set; and determining the third to-be-processed sample set and the fourth to-be-processed sample set as the target sample.

In a possible implementation, the performing the stepwise discriminant analysis on the second to-be-selected sample set to acquire a third to-be-processed sample set includes: selecting multiple first variables meeting the significance criterion in the second to-be-selected sample set by using the stepwise discriminant analysis, and acquiring N variables among the multiple first variables meeting the significance criterion, to be inputted in the third to-be-processed sample set, where N is a positive integer; or dividing the first preliminary selection samples in the second to-be-selected sample set into multiple forward selection subsets equally, and selecting M variables meeting the significance criterion from each of the forward selection subsets, to be inputted in the third to-be-processed sample set, where M is a positive integer.

In a possible implementation, the performing the cluster analysis on the second to-be-selected sample set to acquire a fourth to-be-processed sample set includes: classifying the first preliminary selection samples in the second to-be-selected sample set by using the cluster analysis to acquire multiple cluster analysis sets with different classes; and acquiring variables meeting the significance criterion in each of the cluster analysis sets to form the fourth to-be-processed sample set.

In a possible implementation, in a case that the third to-be-processed sample set and the fourth to-be-processed sample set are determined as the target sample, the method further includes: performing a duplication eliminating operation on the third to-be-processed sample set and the fourth to-be-processed sample set.

In a second aspect, a device for selecting a service parameter is provided according an embodiment of the present disclosure. The device for selecting the service parameter has functions for performing operations in the apparatus for selecting a service parameter in the first aspect. The functions may be implemented by hardware, and may also be implemented by executing corresponding software by the hardware. The hardware or software includes one or more modules corresponding to the functions. In a possible implementation, the device for selecting the service parameter includes a processor and a memory. The memory is configured to store a program for performing the above method by the device for selecting the service parameter, and the processor is configured to execute the program stored in the memory. The device for selecting the service parameter may further include a communication interface via which the device for selecting the service parameter communicates with other devices or a communication network.

In a third aspect, a computer storage medium is provided according to an embodiment of the present disclosure. The computer storage medium is configured to store computer software instructions used by the device for selecting the service parameter described above, the computer software instructions include a program for performing the above aspects designed for the device for selecting the service parameter described above. It can be seen from the above technical solutions that, the embodiments of the present disclosure have the following advantages. With the method for selecting the service parameter and a related device according to the embodiments of the present disclosure, a first candidate sample set including multiple candidate samples is configured, an IV of each of the candidate samples in the first candidate sample set is acquired, a candidate sample of which the IV exceeds a preset threshold in the first candidate sample set is determined as a first preliminary selection sample, and the first preliminary selection sample is stored in a second to-be-selected sample set, and the second to-be-selected sample set is processed by using stepwise discriminant analysis and/or cluster analysis to acquire a target sample meeting a significance criterion. The target sample is used to determine the service parameter. Variables having no significant effect are eliminated based on the IV to acquire the second to-be-selected sample set, and the target sample meeting the significance criterion is acquired by performing the stepwise discriminant analysis and the cluster analysis on the second to-be-selected sample set, ensuring the variable diversity, optimizing the existing selection process, and reducing the variable information loss during the dimensionality reduction process. These and other aspects of the present disclosure are brief and can be easily understood from the following description of the embodiments.

## BRIEF DESCRIPTION OF THE DRAWINGS

Figure 1 is a flowchart of a method for selecting a service parameter according to an embodiment of the present disclosure;

Figure 2 is a flowchart of a method for selecting a service parameter according to another embodiment of the present disclosure;

Figure 3 is a structural diagram of a device for selecting a service parameter according to an embodiment of the present disclosure; and

Figure 4 is a structural diagram of an apparatus for selecting a service parameter according to an embodiment of the present disclosure.

## DETAILED DESCRIPTION OF EMBODIMENTS

In order to make technical solutions of the present disclosure be better understood by those skilled in the art, technical solutions in embodiments of the present disclosure are clearly and completely described in conjunction with drawings in the embodiments of the present disclosure.

In some flows described in the specification, claims and the drawings of the present disclosure, multiple operations may appear in a specific order. However, it should be clearly understood that the operations may be performed in an order other than the order in which the operations appear herein, or performed in parallel. Serial numbers of the operations, such as 101 and 102, are only used to distinguish an operation from another operation, and the serial numbers do not indicate any execution order. In addition, the flows may include more or fewer operations, and the operations may be performed sequentially or in parallel. It should be noted that, the terms "a first...", "a second...", and the like herein are only used to distinguish a message, device, module, and the like from another message, device, module, and the like, and the terms do not indicate any order, and "the first..." and "the second..." may have the same type or different types.

Before detailed description, some terms, that will be used possibly, are introduced as follows.

A variance inflation factor (VIF) indicates a ratio of a variance in a case that multicollinearity exists among explanatory variables to a variance in a case that no multicollinearity exists among the explanatory variables. The VIF is the reciprocal of a tolerance. A greater VIF indicates more serious multicollinearity. It can be seen from an empirical determination method that, no multicollinearity exists in the case of $0<VIF<10$, severe multicollinearity exists in the case of $10 \leq VIF<100$, and more severe multicollinearity exists in the case of $VIF \geq 100$.

An information value (IV) is used to determine whether a variable has a sufficient discrimination ability in a binary dependent variable.

A stepwise discriminant analysis process (STEPDISC) is performed to screen variables meeting a significance criterion for discriminating data before discriminant analysis. The stepwise discriminant analysis may be performed by a forward selection manner, a backward elimination manner, and a stepwise selection manner, to select a set of variables that can fully indicate differences between classes and discard other variables that contain less information.

Cluster analysis (Proc Varclus) is similar to principal component analysis, and is generally applied in variable dimensionality reduction to eliminate redundant variables. With this type of variable classification method, variables in a same class become correlated with each other as far as possible, and variables between different classes become uncorrelated with each other as far as possible. In a case that a second characteristic root of a certain class is greater than a threshold, the class is further divided into two different classes.

A Significance criterion is used in a statistical method for studying relationships between one or more random variables $Y1, Y2, ..., Yi$ and other variables $X1, X2, ..., Xk$, which may also be referred to as multiple regression analysis. Generally, the $Y1, Y2, ..., Yi$ are referred to as dependent variables, and the $X1, X2, ..., Xk$ are referred to as independent variables. The regression analysis is a mathematical model. Especially, the regression analysis is a special linear model in a case that the dependent variables and the independent variables are in a linear relationship. In this case, multiple independent variables collectively affect one dependent variable. Therefore, it is required to determine which independent variable(s) has a significant effect on the dependent variable and determine which independent variable(s) has no significant effect on the dependent variable, the independent variables having a significant effect are introduced into the model, and the independent variables having no significant effect are eliminated. The process may be generally performed in a stepwise regression manner, a forward regression manner, or a backward regression manner.

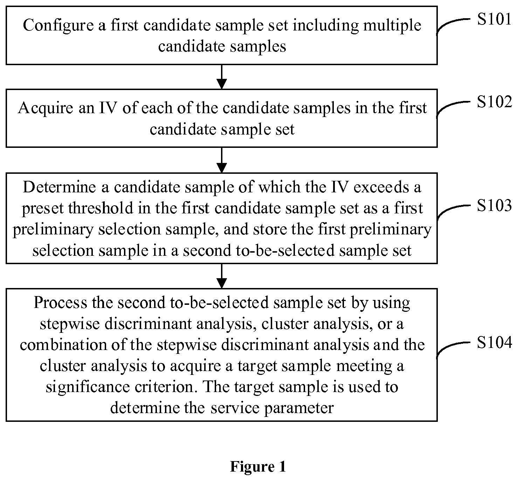

Referring to Figure 1, a method for selecting a service parameter is provided according to an embodiment of the present disclosure. The method includes the following steps S101 to S104.

In S101, a first candidate sample set is configured. The first candidate sample set includes multiple candidate samples.

The first candidate sample set may include multiple candidate samples. The candidate samples may be variables, and may specifically be different types of variables. Some of the variables may have correlations with other variables or have no correlation with other variables, and required variables are included in the variables. An object of the present disclosure is to select the required variables. It should be noted that, the number of the candidate samples in the first candidate sample set is massive, and loss of a useful variable and great time consumption may be caused due to an inappropriate selection method. The candidate samples are included in the first candidate sample set for selection in subsequent steps.

In S102, an IV of each of the candidate samples in the first candidate sample set is acquired.

The IV (Information Value) is used to determine whether a variable has a sufficient discrimination ability in a binary dependent variable. The value of the IV may indicate discrimination of a variable X for a variable Y based on an evaluation criterion. That is, 1) it indicates no discrimination in the case of the value $\leq 0.02$; 2) it indicates weak discrimination in the case of the value being in a range of (0.02, 0.1]; 3) it indicates moderate discrimination in the case of the value being in a range of (0.1, 0.3]; and 4) it indicates strong discrimination in the case of the value $\geq 0.3$. In this embodiment, an IV greater than 0.01 may be selected in order to appropriately relax conditions in a preliminary screening process performed based on the IV Practically, those skilled in the art may select other numerical values, which is not limited herein.

It should be noted that, the IV may be only regarded as one of the criterions for determining whether the independent variable X has discrimination to the dependent variable Y. Specifically, in an actual modeling process, whether the variable is eventually introduced into the model is determined based on many other consideration factors, such as a P-Value and a Bivar figure, which is not limited herein.

In S103, a candidate sample of which the IV exceeds a preset threshold in the first candidate sample set is determined as a first preliminary selection sample, and the first preliminary selection sample is stored in a second to-be-selected sample set.

The preset threshold may be 0.01. In a case that the IV of a candidate sample exceeds 0.01, the candidate sample is determined as a first preliminary selection sample, i.e., the candidate sample passes through the primary selection performed based on the IV The first preliminary selection sample acquired through the preliminary selection is stored in a second to-be-selected sample set for subsequent steps, and a candidate sample of which the IV does not exceed the preset threshold is eliminated.

In S104, the second to-be-selected sample set is processed by using stepwise discriminant analysis, cluster analysis, or a combination of the stepwise discriminant analysis and the cluster analysis to acquire a target sample meeting a significance criterion. The target sample is used to determine the service parameter.

A second round of screening may be performed on the second to-be-selected sample set by using the stepwise discriminant analysis, the cluster analysis, or a combination of the stepwise discriminant analysis and the cluster analysis. That is, the stepwise discriminant analysis and the cluster analysis may be adopted separately or both the stepwise discriminant analysis and the cluster analysis may be adopted. The significance criterion indicates that a variable has significance in the statistics. A check result on the significance criterion is outputted through a variance analysis table, and whether a linear relationship of a regression equation is significant is checked based on the significance criterion. Optionally, the significance criterion is greater than 0.05. The stepwise discriminant analysis is performed by a forward selection manner, a backward elimination manner, and a stepwise selection manner, to select a set of variables that can fully indicate differences between the classes and discard other variables that contain less information.

As compared with stepwise regression analysis in which a variable parameter and various statistical values are required to be calculated while a variable is selected, no discriminant function is required to be calculated while a variable is selected in the stepwise discriminant analysis, thus the efficiency of stepwise discriminant analysis is greatly improved. Therefore, the stepwise discriminant analysis is applied in variable pre-screening during the modeling with massive data. The stepwise discriminant analysis is generally applied in variable pre-screening during the discriminant analysis. However, in this embodiment, the stepwise discriminant analysis is innovatively applied in variable preliminary screening before the stepwise regression analysis, and the stepwise selection manner is adopted in combination with the forward selection manner to avoid excessive information loss due to a single manner.

In a case that a modeling data set includes thousands of variables, obvious correlations exist between some variables, for example, the variables are in the same type, and the variables are required to be eliminated. Independent variables may be classified into different classes by using the cluster analysis, and representative variables are selected from each of the classes. In this way, the number of variables can be reduced rapidly by the operator for modeling, thereby speeding up the entire modeling process.

Cluster analysis (Proc Varclus) is similar to principal component analysis, and is generally applied in variable dimensionality reduction to eliminate redundant variables. With this type of variable classification method, variables in a same class become correlated with each other as far as possible, and variables between different classes become uncorrelated with each other as far as possible. In a case that a second characteristic root of a certain class is greater than a threshold, the class is further divided into two different classes.

With the method for selecting the service parameter according to the embodiment of the present disclosure, a first candidate sample set including multiple candidate samples is configured, an IV of each of the candidate samples in the first candidate sample set is acquired, a candidate sample of which the IV exceeds a preset threshold in the first candidate sample set is determined as a first preliminary selection sample, and the first preliminary selection sample is stored in a second to-be-selected sample set, and the second to-be-selected sample set is processed by using stepwise discriminant analysis, cluster analysis, or a combination of the stepwise discriminant analysis and the cluster analysis to acquire a target sample meeting a significance criterion. The target sample is used to determine the service parameter. Variables having no significant effect are eliminated based on the IV to acquire the second to-be-selected sample set, and the target sample meeting the significance criterion is acquired by performing the stepwise discriminant analysis and the cluster analysis on the second to-be-selected sample set, ensuring the variable diversity, optimizing the existing variable selection process, and reducing the information loss during the dimensionality reduction process.

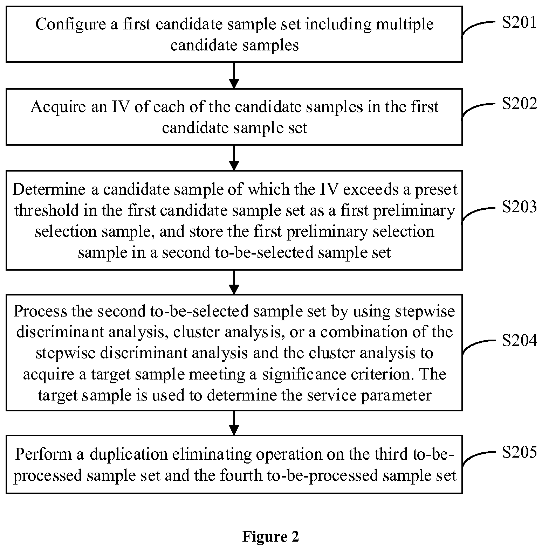

Referring to Figure 2, a method for selecting a service parameter is provided according to another embodiment of the present disclosure. The method includes the following steps S201 to S205.

In S201, a first candidate sample set including multiple candidate samples is configured.

In S202, an IV of each of the candidate samples in the first candidate sample set is acquired.

A process of acquiring the IV of each of the candidate samples in the first candidate sample set may be performed as follows.

The candidate sample is split based on the number of pre-configured binary files.

The IV of the candidate sample is acquired based on correspondence between the binary files and the IV Specifically, the IV is calculated from the following equation:

$$IV = \sum_{i=1}^{n} (\frac{\#G_i}{\#G_T} - \frac{\#B_i}{\#B_T}) * \ln(\frac{\#G_i / \#G_T}{\#B_i / \#B_T})$$

In the IV calculation process, an independent variable X is required to be split into different bins (binary files) for calculation, where n represents the number of the split binary files, and $\#G_i$ and $\#B_i$ represent the number of good samples and bad samples in each of the binary files, respectively. For a continuous variable, the variable is firstly split into binary files, and the IV of the variable varies based on the number of the binary files. The IV increases as the number of the binary files increases, and a rate of the increase becomes small gradually. For the continuous variable, the number of the binary files may be 20, which is not limited herein.

In S203, a candidate sample of which the IV exceeds a preset threshold in the first candidate sample set is determined as a first preliminary selection sample, and the first preliminary selection sample is stored in a second to-be-selected sample set.

Step S203 is similar to step S103 in the previous embodiment, which is not described in detail herein.

In S204, the second to-be-selected sample set is processed by using stepwise discriminant analysis, cluster analysis, or a combination of the stepwise discriminant analysis and the cluster analysis to acquire a target sample meeting a significance criterion. The target sample is used to determine the service parameter.

In the case that only the stepwise discriminant analysis is used, the stepwise discriminant analysis is performed on the second to-be-selected sample set to acquire a third to-be-processed sample set, and the third to-be-processed sample set and/or a fourth to-be-processed sample set is determined as the target sample.

In the stepwise discriminant analysis, one round of forward selection may be performed and five rounds of stepwise selection may be performed.

In a case that the stepwise selection is used, a stepwise regression analysis method is adopted to select multiple first variables meeting the significance criterion in the second to-be-selected sample set.

N variables among the multiple first variables meeting the significance criterion are acquired to be inputted in the third to-be-processed sample set, where N is a positive integer.

By the stepwise selection, all the variables that meet a specified significance criterion are selected and are outputted to a specified data set. Then the top N selected variables are selected. In practice, a case that the number of variables meeting the significance criterion cannot reach to N may occur. In this case, the significance criterion and the number of variables to be outputted may be adjusted. In this embodiment, N may be 500, which is not limited herein.

In a case that the forward selection is used, the first preliminary selection samples in the second to-be-selected sample set are equally divided into multiple forward selecting subsets.

M variables meeting the significance criterion are selected from each of the forward selection subsets to be inputted in the third to-be-processed sample set, where M is a positive integer.

Variables are randomly grouped into 5 groups equally. In each group, M variables among the variables meeting a specified significance criterion are selected by using the forward selection. In this embodiment, M may be 100, which is not limited herein.

In the case that only the cluster analysis is used, the cluster analysis is performed on the second to-be-selected sample set to acquire a fourth to-be-processed sample set, and the third to-be-processed sample set and/or the fourth to-be-processed sample set is determined as the target sample.

The first preliminary selection samples in the second to-be-selected sample set are classified by using the cluster analysis to acquire multiple cluster analysis sets with different classes.

Variables meeting the significance criterion in each of the cluster analysis sets are acquired to form the fourth to-be-processed sample set.

The classification may be performed by setting a second characteristic root. For example, the second characteristic root may be set to be greater than 0.7. After the classification, variables meeting the significance criterion are required to be selected from each class. The selected variable is required to meet the following conditions: 1) the variable has a high correlation with variables in the class to which the variable belongs; and 2) the variable has a low correlation with variables in other classes. Whether the variable meets the above two conditions may be determined based on an index $1 - R^2$ which may be expressed as follows.

$$1 - R^2 = \frac{1 - R^2 \text{ the class of the variable}}{1 - R^2 \text{ the class similar to the class of the variable}}$$

A variable in the outputted fourth to-be-processed sample set is the index $1 - R^2$. The value of the index is not limited in the variable selection, and the number of variables corresponding to the value of the index may be selected in each class based on the value. The selection criterion is that the value is as small as possible.

In the case that both the stepwise discriminant analysis and the cluster analysis are used, the stepwise discriminant analysis is performed on the second to-be-selected sample set to acquire a third to-be-processed sample set, and the cluster analysis is performed on the second to-be-selected sample set to acquire a fourth to-be-processed sample set, and the third to-be-processed sample set and the fourth to-be-processed sample set are determined as the target sample.

In S205, a duplication eliminating operation is performed on the third to-be-processed sample set and the fourth to-be-processed sample set.

In a case that the third to-be-processed sample set and the fourth to-be-processed sample set are determined as the target sample, the screening is performed on the second to-be-selected sample set to respectively acquire the third to-be-processed sample set and the fourth to-be-processed sample set by using the stepwise discriminant analysis and the cluster analysis. Since the third to-be-processed sample set and the fourth to-be-processed sample set are selected separately, the same variable may exist in the third to-be-processed sample set and the fourth to-be-processed sample set. In the modeling process, duplicate variables are required to be eliminated by a duplication eliminating operation which should be understood by those skilled in the art and specific details are omitted.

For ease of understanding, a first candidate sample set a1, a2, a3, ... a10000 is taken as an example. Preliminary selection is performed based on a condition that the IV is greater than 0.01, and a second to-be-selected sample set a1, a2, a3, ... a8000 is acquired. One round of forward selection is performed on the second to-be-selected sample set for variable selection, and 500 variables including a1, a5, a16, ... a5977 are acquired and inputted in a third to-be-processed sample set. In addition, five rounds of stepwise analysis is performed on the second to-be-selected sample set for variable selection, and 500 variables including a1, a5, a7, ... a7201 are acquired and inputted in the third to-be-processed sample set. Cluster analysis is performed on the second to-be-selected sample set for variable selection, and 200 variables including a1, a52, a103, ..., a7050 are acquired and inputted in a fourth to-be-processed sample set. The 1200 variables in the third to-be-processed sample set and the fourth to-be-processed sample set are determined as target samples. It should be understood that duplicate variables exist in the 1200 variables. A final variable pool may be acquired by a duplication eliminating operation and may be used for modeling.

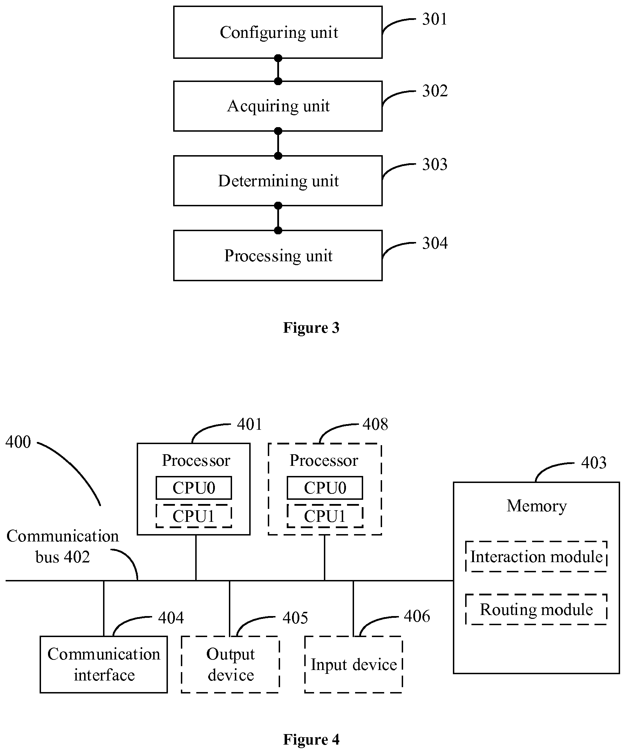

Referring to Figure 3, based on the method for selecting a service parameter described above, a device for selecting a service parameter is further provided according to an embodiment of the present disclosure, which is described in detail as follows.

The device includes a configuring unit 301, an acquiring unit 302, a determining unit 303 and a processing unit 304.

The configuring unit 301 is configured to configure a first candidate sample set including multiple candidate samples.

The acquiring unit 302 is configured to acquire an IV of each of the candidate samples in the first candidate sample set.

The determining unit 303 is configured to: determine a candidate sample of which the IV exceeds a preset threshold in the first candidate sample set as a first preliminary selection sample, and store the first preliminary selection sample in a second to-be-selected sample set.

The processing unit 304 is configured to process the second to-be-selected sample set by using stepwise discriminant analysis, cluster analysis, or a combination of the stepwise discriminant analysis and the cluster analysis to acquire a target sample meeting a significance criterion. The target sample is used to determine the service parameter.

Optionally, the acquiring unit 302 is further configured to: split the candidate sample based on the number of pre-configured binary files; and acquire the IV of the candidate sample based on correspondence between the binary files and the IV

Optionally, the processing unit 304 is further configured to perform the stepwise discriminant analysis on the second to-be-selected sample set to acquire a third to-be-processed sample set and/or perform the cluster analysis on the second to-be-selected sample set to acquire a fourth to-be-processed sample set; and determine the third to-be-processed sample set and/or the fourth to-be-processed sample set as the target sample.

Optionally, the processing unit 304 is further configured to: select multiple first variables meeting the significance criterion in the second to-be-selected sample set by using the stepwise discriminant analysis, and acquire N variables among the multiple first variables meeting the significance criterion, to be inputted in the third to-be-processed sample set, where N is a positive integer; and/or divide the first preliminary selection samples in the second to-be-selected sample set into multiple forward selection subsets equally, and select M variables meeting the significance criterion from each of the forward selection subsets, to be inputted in the third to-be-processed sample set, where M is a positive integer.

Optionally, the processing unit 304 is further configured to: classify the first preliminary selection samples in the second to-be-selected sample set by using the cluster analysis to acquire multiple cluster analysis sets with different classes; and acquire variables meeting the significance criterion in each of the cluster analysis sets to form the fourth to-be-processed sample set.

Optionally, the processing unit 304 is further configured to perform a duplication eliminating operation on the third to-be-processed sample set and the fourth to-be-processed sample set in a case that the third to-be-processed sample set and the fourth to-be-processed sample set are determined as the target sample.

As shown in Figure 4, in order to implement the above method, an apparatus for selecting a service parameter is further provided according to an embodiment of the present disclosure. The device includes a processor 401 and a memory 403.

The memory 403 is configured to store computer readable programs.

The processor 401 is configured to execute the programs in the memory to: configure a first candidate sample set including multiple candidate samples; acquire an IV of each of the candidate samples in the first candidate sample set; determine a candidate sample of which the IV exceeds a preset threshold in the first candidate sample set as a first preliminary selection sample, and store the first preliminary selection sample in a second to-be-selected sample set; and process the second to-be-selected sample set by using stepwise discriminant analysis, cluster analysis, or a combination of the stepwise discriminant analysis and the cluster analysis to acquire a target sample meeting a significance criterion, where the target sample is used to determine the service parameter.

Figure 4 is a schematic diagram of an apparatus for selecting a service parameter according to an embodiment of the present disclosure. An apparatus 200 for selecting a service parameter includes at least one processor 401, a communication bus 402, a memory 403, and at least one communication interface 404.

The processor 401 may be a general-purpose central processing unit (CPU), a microprocessor, an application-specific integrated circuit (ASIC), or one or more integrated circuits for controlling execution of programs in the solutions of the present disclosure.

The communication bus 402 may include a channel via which information is transmitted between the above components. The communication interface 404 is configured to communicate with other devices or communication networks such as ethernet, a radio access network (RAN), a wireless local area network (WLAN), via any device such as a transceiver.

The memory 403 may be a read-only memory (ROM) or other types of static storage devices that can store static information and instructions, and a random access memory (RAM) or other types of dynamic storage devices that can store dynamic information and instructions. The memory 403 may also be an electrically erasable programmable read-only memory (EEPROM), a compact disc read-only memory (CD-ROM) or other optical disk storages, disc storages (including compact discs, laser discs, compact discs, digital versatile discs, blue-ray discs, etc.), magnetic disk storage media or other magnetic storage devices, or any other media that can be used to carry or store desired program codes in the form of instructions or data structures and can be accessed by computers, which is not limited herein. The memory may exist independently and is connected to a processor via a bus. The memory may also be integrated with the processor.

The memory 403 is configured to store program codes for executing the solutions of the present disclosure, and the execution is controlled by the processor 401. The processor 401 is configured to execute the program codes stored in the memory 403.

In a specific implementation, as an embodiment, the processor 401 may include one or more CPUs, such as CPU0 and CPU1 in Figure 4.

In a specific implementation, as an embodiment, the apparatus 400 for selecting the service parameter may include multiple processors, such as the processor 401 and a processor 408 in Figure 4. Each of the multiple processors may be a single-CPU processor or a multi-CPU processor. A processor herein may refer to one or more devices, circuits, and/or processing cores for processing data (e.g., computer program instructions).

In a specific implementation, as an embodiment, the apparatus 400 for selecting the service parameter may further include an output device 405 and an input device 406. The output device 405 communicates with the processor 401 and may display information in a variety of ways. For example, the output device 405 may be a liquid crystal display (LCD), a light emitting diode (LED) display device, a cathode ray tube (CRT) display device, a projector, or the like. The input device 406 communicates with the processor 401 and may receive user input in a variety of ways. For example, the input device 406 may be a mouse, a keyboard, a touch screen device, a sensor device, or the like.

The above-mentioned the apparatus 400 for selecting the service parameter may be a general-purpose computer device or a special-purpose computer device. In a specific implementation, the apparatus 400 for selecting the service parameter may be a virtual reality device, a desktop, a laptop, a network server, a personal digital assistant (PDA), a mobile phone, a tablet computer, a wireless terminal device, a communication device, an embedded device, or a device with a structure similar to the device in Figure 4. The type of the apparatus 400 for selecting the service parameter is not limited in the embodiments of the present disclosure.

It should be clearly understood by those skilled in the art that, for convenience and brevity of description, specific operation processes of the above-described systems, devices, and units may refer to corresponding processes in the method embodiments, which are not described in detail herein.

It should be understood that, systems, devices, and methods provided in the embodiments of the present disclosure may be implemented in other ways. For example, the device embodiments described above are merely illustrative. For example, the division of a unit is only a logical function division, and may be implemented in other division manners in practice. For example, multiple units or components may be combined or may be integrated into another system, or some features may be ignored or not performed. In addition, the illustrated or discussed mutual coupling or direct coupling or communication connection may be indirect coupling or communication connection via some interfaces, devices or units, and may be electrical, mechanical or in other forms.

The units described as separate parts may or may not be physically separated, and the parts illustrated as units may or may not be physical units, that is, may be located in one place, or may be distributed on multiple network units. Some or all of the units may be selected according to actual requirements to achieve the purpose of the solutions in the embodiments.

In addition, functional units in the embodiments of the present disclosure may be integrated into one processing unit, or each of the functional units may exist alone physically, or two or more of the functional units may be integrated into one unit. The integrated unit may be implemented by hardware or by a software functional unit.

A method for selecting a service parameter and a related device according to the present disclosure have been described in detail. Those skilled in the art can make modifications to the specific embodiments and the application scope based on the idea of the embodiments of the present disclosure. In summary, contents in this specification should not be construed as limiting the present disclosure.

**Claims**

1. A method for selecting a service parameter, comprising:

   configuring a first candidate sample set comprising a plurality of candidate samples;
   acquiring an information value (IV) of each of the candidate samples in the first candidate sample set, wherein the IV is a ratio of a variable to a binary dependent variable;
   determining a candidate sample of which the IV exceeds a preset threshold in the first candidate sample set as a first preliminary selection sample, and storing the first preliminary selection sample in a second to-be-selected sample set; and
   processing the second to-be-selected sample set by using stepwise discriminant analysis or cluster analysis to acquire a target sample meeting a significance criterion, wherein the target sample is used to determine the service parameter.

2. The method according to claim 1, wherein, in the target sample meeting the significance criterion, correlations between variables with a same type and correlations between variables with different types meet the significance criterion.

3. The method according to claim 1, wherein the acquiring an IV of each of the candidate samples in the first candidate sample set comprises:

   splitting the candidate sample based on the number of pre-configured binary files; and
   acquiring the IV of the candidate sample based on correspondence between the binary files and the IV

4. The method according to claim 1, wherein the processing the second to-be-selected sample set by using stepwise discriminant analysis or cluster analysis to acquire a target sample meeting a significance criterion comprises:

   processing the second to-be-selected sample set by using a combination of the stepwise discriminant analysis and the cluster analysis to acquire the target sample meeting the significance criterion.

5. The method according to claim 1, wherein the processing the second to-be-selected sample set by using stepwise discriminant analysis or cluster analysis to acquire a target sample meeting a significance criterion comprises:

   performing the stepwise discriminant analysis on the second to-be-selected sample set to acquire a third to-be-processed sample set or performing the cluster analysis on the second to-be-selected sample set to acquire a fourth to-be-processed sample set; and
   determining the third to-be-processed sample set or the fourth to-be-processed sample set as the target sample.

6. The method according to claim 4, wherein the processing the second to-be-selected sample set by using stepwise discriminant analysis or cluster analysis to acquire a target sample meeting a significance criterion comprises:

performing the stepwise discriminant analysis on the second to-be-selected sample set to acquire a third to-be-processed sample set and performing the cluster analysis on the second to-be-selected sample set to acquire a fourth to-be-processed sample set; and

determining the third to-be-processed sample set and the fourth to-be-processed sample set as the target sample.

7. The method according to claim 5, wherein the performing the stepwise discriminant analysis on the second to-be-selected sample set to acquire a third to-be-processed sample set comprises:

selecting a plurality of first variables meeting the significance criterion in the second to-be-selected sample set by using the stepwise discriminant analysis, and acquiring N variables among the plurality of first variables meeting the significance criterion, to be inputted in the third to-be-processed sample set, wherein N is a positive integer; or

dividing the first preliminary selection samples in the second to-be-selected sample set into a plurality of forward selection subsets equally, and selecting M variables meeting the significance criterion from each of the forward selection subsets, to be inputted in the third to-be-processed sample set, wherein M is a positive integer.

8. The method according to claim 5, wherein the performing the cluster analysis on the second to-be-selected sample set to acquire a fourth to-be-processed sample set comprises:

classifying the first preliminary selection samples in the second to-be-selected sample set by using the cluster analysis to acquire a plurality of cluster analysis sets with different classes; and

acquiring variables meeting the significance criterion in each of the cluster analysis sets to form the fourth to-be-processed sample set.

9. A device for selecting a service parameter, comprising:

a configuring unit configured to configure a first candidate sample set comprising a plurality of candidate samples;

an acquiring unit configured to acquire an IV of each of the candidate samples in the first candidate sample set, wherein the IV is a ratio of a variable to a binary dependent variable;

a determining unit configured to: determine a candidate sample of which the IV exceeds a preset threshold in the first candidate sample set as a first preliminary selection sample, and store the first preliminary selection sample in a second to-be-selected sample set; and

a processing unit configured to process the second to-be-selected sample set by using stepwise discriminant analysis or cluster analysis to acquire a target sample meeting a significance criterion, wherein the target sample is used to determine the service parameter.

10. The device according to claim 9, wherein the acquiring unit is further configured to:

split the candidate sample based on the number of pre-configured binary files; and

acquire the IV of the candidate sample based on correspondence between the binary files and the IV

11. The device according to claim 9, wherein the acquiring unit is further configured to: process the second to-be-selected sample set by using a combination of the stepwise discriminant analysis and the cluster analysis to acquire the target sample meeting the significance criterion.

12. The device according to claim 9, wherein the processing unit is further configured to:

perform the stepwise discriminant analysis on the second to-be-selected sample set to acquire a third to-be-processed sample set, or perform the cluster analysis on the second to-be-selected sample set to acquire a fourth to-be-processed sample set; and

determine the third to-be-processed sample set or the fourth to-be-processed sample set as the target sample.

13. The device according to claim 9, wherein the processing unit is further configured to:

perform the stepwise discriminant analysis on the second to-be-selected sample set to acquire a third to-be-processed sample set, and perform the cluster analysis on the second to-be-selected sample set to acquire a fourth to-be-processed sample set; and

determine the third to-be-processed sample set and the fourth to-be-processed sample set as the target sample.

14. The device according to claim 12, wherein the processing unit is further configured to:

select a plurality of first variables meeting the significance criterion in the second to-be-selected sample set by using the stepwise discriminant analysis, and acquire N variables among the plurality of first variables meeting the significance criterion, to be inputted in the third to-be-processed sample set, wherein N is a positive integer; or divide the first preliminary selection samples in the second to-be-selected sample set into a plurality of forward selection subsets equally, and select M variables meeting the significance criterion from each of the forward selection subsets, to be inputted in the third to-be-processed sample set, wherein M is a positive integer.

15. The device according to claim 12, wherein the processing unit is further configured to:

classify the first preliminary selection samples in the second to-be-selected sample set by using the cluster analysis to acquire a plurality of cluster analysis sets with different classes; and acquire variables meeting the significance criterion in each of the cluster analysis sets to form the fourth to-be-processed sample set.

16. An apparatus for selecting a service parameter, comprising:

a memory configured to store computer readable programs; and a processor configured to execute the programs in the memory to perform the method according to claims 1 to 6.

Configure a first candidate sample set including multiple candidate samples — S101

Acquire an IV of each of the candidate samples in the first candidate sample set — S102

Determine a candidate sample of which the IV exceeds a preset threshold in the first candidate sample set as a first preliminary selection sample, and store the first preliminary selection sample in a second to-be-selected sample set — S103

Process the second to-be-selected sample set by using stepwise discriminant analysis, cluster analysis, or a combination of the stepwise discriminant analysis and the cluster analysis to acquire a target sample meeting a significance criterion. The target sample is used to determine the service parameter — S104

**Figure 1**

Configure a first candidate sample set including multiple candidate samples — S201

Acquire an IV of each of the candidate samples in the first candidate sample set — S202

Determine a candidate sample of which the IV exceeds a preset threshold in the first candidate sample set as a first preliminary selection sample, and store the first preliminary selection sample in a second to-be-selected sample set — S203

Process the second to-be-selected sample set by using stepwise discriminant analysis, cluster analysis, or a combination of the stepwise discriminant analysis and the cluster analysis to acquire a target sample meeting a significance criterion. The target sample is used to determine the service parameter — S204

Perform a duplication eliminating operation on the third to-be-processed sample set and the fourth to-be-processed sample set — S205

**Figure 2**

Figure 3

Figure 4

# INTERNATIONAL SEARCH REPORT

| | |
|---|---|
| International application No. | |
| | PCT/CN2017/074674 |

**A. CLASSIFICATION OF SUBJECT MATTER**

G06F 17/30 (2006.01) i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS, DWPI: variable, varclus, select, filter, reduce, information value, cluster, threshold, parameter

**C. DOCUMENTS CONSIDERED TO BE RELEVANT**

| Category* | Citation of document, with indication, where appropriate, of the relevant passages | Relevant to claim No. |
|---|---|---|
| Y | US 2010153456 A1 (LEE TAIYEONG et al.) 17 June 2010 (17.06.2010) description, paragraphs [0017]-[0059] | 1-16 |
| Y | US 2012078681 A1 (FAIR ISAAC CORP.) 29 March 2012 (29.03.2012) description, paragraphs [0017]-[0050] | 1-16 |

| | |
|---|---|
| ☐ Further documents are listed in the continuation of Box C. | ☒ See patent family annex. |

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 May 2017 | 27 May 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>WANG, Nan<br><br>Telephone No. (86-10) 62411771 |

Form PCT/ISA /210 (second sheet) (July 2009)

**INTERNATIONAL SEARCH REPORT**
Information on patent family members

| | International application No. |
|---|---|
| | PCT/CN2017/074674 |

| Patent Documents referred in the Report | Publication Date | Patent Family | Publication Date |
|---|---|---|---|
| US 2010153456 A1 | 17 June 2010 | US 8190612 B2 | 29 May 2012 |
| US 2012078681 A1 | 29 March 2012 | None | |

Form PCT/ISA /210 (patent family annex) (July 2009)

**REFERENCES CITED IN THE DESCRIPTION**

**Patent documents cited in the description**

- CN 201610120612